# EUROPÄISCHE PATENTANMELDUNG

(11) **EP 1 707 467 A2**
(43) Veröffentlichungstag der Anmeldung: **04.10.2006**
(21) Anmeldenummer: 06002891.7
(22) Anmeldetag: 14.02.2006
(51) Int. Cl.: B62B 3/06

(54) **Niederhub-Flurförderzeug**

(30) Priorität: 31.03.2005 DE 102005014907
(71) Anmelder: Jungheinrich Aktiengesellschaft, 22047 Hamburg (DE)
(72) Erfinder: Hellmann, Günter, Dipl.-Ing., 23641 Sievershütten (DE); Krenzin, Marcel, Dipl.-Ing., 24576 Bad Bramstedt (DE)
(74) Vertreter: Hauck, Graalfs, Wehnert, Döring, Siemons

(57) **Zusammenfassung**

Niederhub-Flurförderzeug (10), mit einem eine Antriebsachse aufweisenden Antriebsteil (12) und einem zwei parallele Radarme aufweisenden, mittels einer Hubvorrichtung höhenverstellbaren Lastteil (14), wobei die Radarme im freien Endbereich Lasträder (28) aufweisen, die in Schwingen gelagert sind, die ihrerseits über ein Gestänge mit dem Antriebsteil (12) so gekoppelt sind, dass die Lasträder (28) in Richtung Untergrund verstellt verschwenkt werden, wenn das Lastteil (14) angehoben wird, wobei am Lastteil (14) eine Zusatzachse (6) vorgesehen ist, auf der das Lastteil (14) in abgesenktem, unbelastetem Zustand ruht, während die Lasträder (28) weitgehend entlastet oder vom Untergrund abgehoben sind.

## Beschreibung

Die Erfindung bezieht sich auf ein Niederhub-Flurförderzeug nach dem Oberbegriff des Patentanspruchs 1.

Niederhub-Flurförderzeuge weisen üblicherweise Radarme auf, welche einerseits zum Fahrgestell gehören und andererseits ein Lasttragmittel bilden. Zu diesem Zweck sind die Radarme mit Hilfe einer geeigneten Hubvorrichtung um einen gewissen Betrag anhebbar, um aufgenommene Paletten ausreichend vom Boden abzuheben und zu einem gewünschten Zielort zu transportieren. Die Lasträder an den vorderen Enden der Radarme sind in Schwingen - den sogenannten Radarmhebeln - gelagert, die ihrerseits über ein Gestänge mit dem Antriebsteil des Flurförderzeugs gekoppelt sind, damit bei einem Anheben des Lastteils die Lasträder in Richtung Untergrund verschwenkt und somit die Radarme nahezu flurparallel angehoben werden.

Radarmunterstützte Niederhub-Flurförderzeuge verfügen üblicherweise über zwei Achsen, nämlich die Antriebsachse und die Lastachse. Die Antriebsachse besteht aus einem gelenkten Antriebsrad alternativ gepaart mit einer oder zwei weiteren Seitenstützrollen. Im ersteren Fall spricht man von einem Dreirad- und im zweiten Fall von einem Vierrad- oder Fünfrad-Fahrwerk. Die Lastachse wird durch die vorderen Lasträder gebildet.

Je nach Aufnahmerichtung oder Art einer Palette müssen von den Lasträdern Querhölzer überfahren werden. Bei besonders glatten Böden kommt es zu dem Problem, dass die Palette vor dem Fahrzeug hergeschoben wird und die Lasträder nicht über das Querholz rollen können. Die leere oder nur leicht beladene Palette kann somit weder zum Transport aufgenommen noch abgesetzt werden.

Es ist bekannt, diesem Problem dadurch zu begegnen, dass an der Unterseite der Radarme Auffahrkufen vorgesehen sind. Es ist auch bekannt, vor oder hinter den Radarmenden sogenannte Kletterrollen vorzusehen, mit denen das Überfahren der Querhölzer erleichtert werden soll. Allerdings lösen diese Vorkehrungen das erwähnte Problem unbefriedigend.

Der Erfindung liegt daher die Aufgabe zugrunde, ein Niederhub-Flurförderzeug zu schaffen, mit dem Paletten auch bei glattem Untergrund sicher aufgenommen werden können.

Diese Aufgabe wird durch die Merkmale des Patentanspruchs 1 gelöst.

Beim erfindungsgemäßen Niederhub-Flurförderzeug ist am Lastteil eine Zusatzachse vorgesehen, die zwischen dem Antriebsteil und den Enden der Radarme angeordnet ist. Über die Zusatzachse stützen sich die Radarme am Untergrund ab, wenn der Lastteil in der vollständig abgesenkten Position ist und zudem keine Last trägt. Die Anordnung der Zusatzachse ist derart, dass in dem beschriebenen Fall das gesamte Fahrzeug über die Zusatzachse in Richtung der Antriebsachse kippt und somit die Lasträder entweder weitgehend entlastet oder etwas über dem Untergrund angehoben sind. Damit stellt das Ein- und Ausfahren in bzw. aus quer gelatteten Paletten kein Problem mehr dar. Wird das Lastteil aus der vollständig abgesenkten Position etwas angehoben, wie das bei standardmäßiger Hubfunktion der Fall ist, fahren die radarmunterstützenden Lasträder in gewohnter Weise aus und heben die Palette vom Boden frei. Gleichzeitig wird oder werden das Rad bzw. die Räder der Zusatzachse angehoben. Das Niederhub-Flurförderzeug weist nun bei aufgenommener Last seine auslegungsgemäß notwendige Antriebsachslast zum Anfahren, Abbremsen und Lenken auf und kann somit sicher betrieben werden.

Für die Auslegung der Anbringung der Zusatzachse ist entscheidend der Abstand zwischen der Oberseite der unteren Latte und der Unterseite der oberen Latte der Palette. Es muß dafür gesorgt sein, dass die Enden der Radarme im abgesenkten Zustand in diesem Abstand sicher einfahren können. Außerdem muß gewährleistet sein, dass in diesem Fall die Oberseite der Radarme einen ausreichenden Abstand zur Unterseite der oberen Latte aufweist, damit zu Beginn des Hubs das Rad der Zusatzachse vom Boden angehoben wird, bevor die Palette angehoben wird. Wesentlich für die Lage der Zusatzachse ist ferner, dass der Schwerpunkt des Fahrzeugs im unbeladenen Zustand zwischen der Antriebs- und der Zusatzachse liegt.

Nach einer Ausgestaltung der Erfindung ist vorgesehen, dass die Zusatzachse bei einem Vierrad-Fahrwerk mindestens ein Rad aufweist. Bei einem Drei- oder Fünfrad-Fahrwerk weist es mindestens zwei Räder auf.

Für den Betrieb des erfindungsgemäßen Flurförderzeugs sind außer dem Einbau der Zusatzachse weitere Vorkehrungen nicht zu treffen, da der Hub der Radarme ohnehin über geeignete Bedienelemente am Flurförderzeug eingestellt werden kann. Es ist jedoch nach einer weiteren Ausgestaltung der Erfindung möglich, die Zusatzachse mit einer separaten Hubvorrichtung auszustatten, z.B. um die Zusatzachse außer Funktion zu setzen, oder bezüglich sehr unterschiedlicher Palettengeometrien einstellbar zu machen.

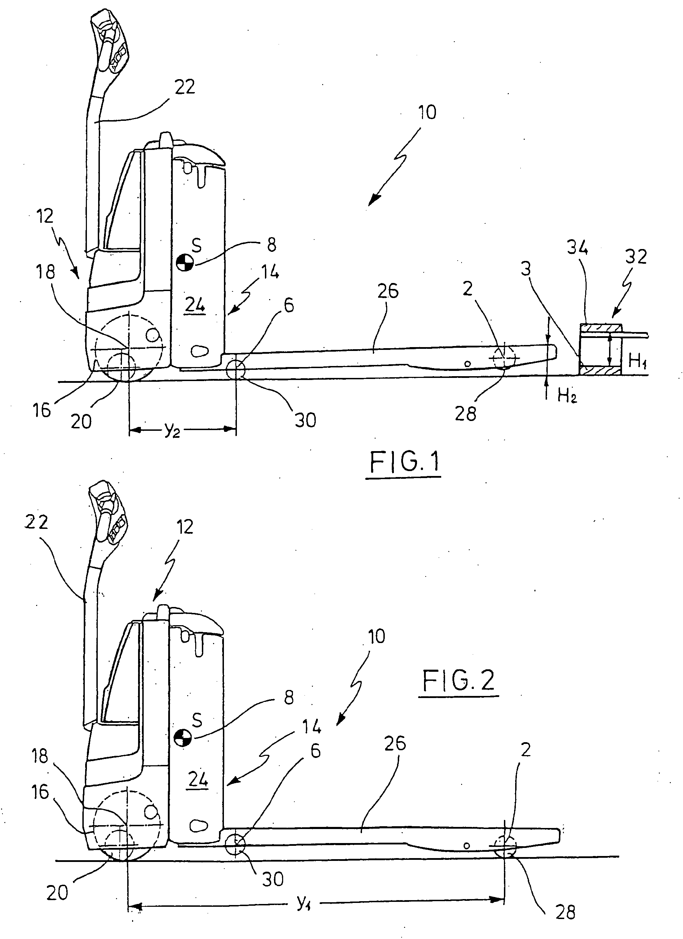

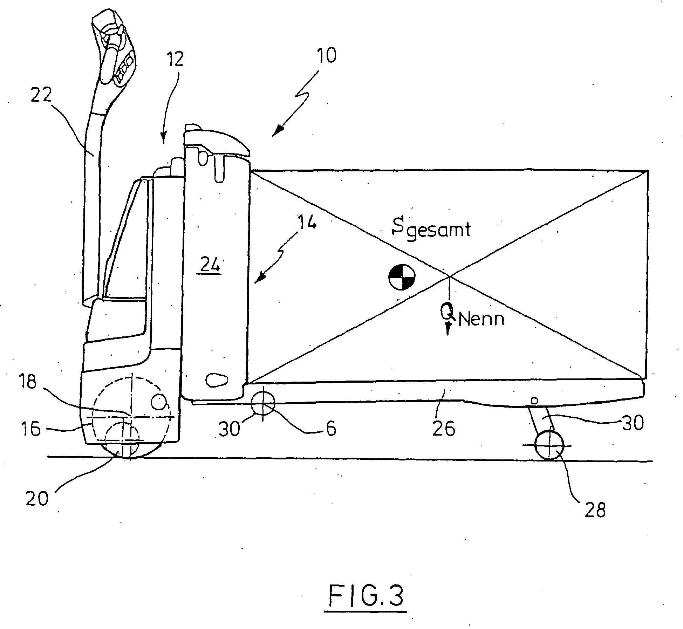

Ein weiterer Nutzen der Erfindung ist der überaus kurze Achsabstand Y2 beim Fahren ohne Last in abgesenkter Lastteilposition (siehe Fig. 1) im Vergleich zum Achsabstand Y2 mit frei gehobener Zusatzachse (siehe Fig. 2). Dieser Sachverhalt ermöglicht das Rangieren und Paletteneinfahren in engen Fluren, besonders auf den Ladeflächen von LKWs.

Positioniert man die Zusatzachse in Fahrzeuglängsrichtung in die Fahrzeugmitte, so ergibt sich sogar der kleinstmögliche Wenderadius.

Ein Ausführungsbeispiel der Erfindung wird nachfolgend anhand von Zeichnungen näher erläutert:
- Fig. 1: zeigt ein Niederhub-Flurförderzeug nach der Erfindung im vollständig abgesenkten Zustand des Lastteils.
- Fig. 2: zeigt das Flurförderzeug nach Fig. 1 in leicht angehobener Position des Lastteils.
- Fig. 3: zeigt das Flurförderzeug nach den Figuren 1 und 2 in angehobener Position des Lastteils mit aufgenommener Last.

Das in den Figuren 1 bis 3 dargestellte Niederhub-Flurförderzeug 10 weist ein Antriebsteil 12 und ein Lastteil 14 auf. Das Antriebsteil weist ein mittiges lenkbares Antriebsrad 16 auf, das die Antriebsachse 18 bildet. Seitlich zu beiden Seiten des Antriebsrads 16 sind Stützrollen vorgesehen, von denen eine bei 20 zu erkennen ist. Die Lenkung des Antriebsrades 16 erfolgt in bekannter Weise über eine Deichsel 22, an deren Kopf Bedienelemente vorgesehen sind (nicht im Einzelnen beschrieben). Im Antriebsteil 12 sind auch der Antriebsmotor und die Hubvorrichtung untergebracht, welche jedoch nicht dargestellt sind.

Das Lastteil 14 weist einen Rahmen 24 auf, in dem auch eine Batterie untergebracht ist. Der Rahmen 24 ist am Antriebsteil 12 in der Höhe geführt und wird von Hubvorrichtung zwischen einer vollständig abgesenkten Position gemäß Figur 1 in eine maximal angehobene Position gemäß Figur 3 in der Höhe verstellt.

An dem Rahmen 24 des Lastteils 14 sind zwei parallel beabstandete Radarme fest angebracht, von denen einer bei 26 zu erkennen ist. An den freien Endbereichen der Radarme sind Lasträder angeordnet, von denen eines bei 28 zu erkennen ist. Wie in Figur 3 zu sehen, sind die Lasträder 28 an einer Schwinge 30 gelagert, die ihrerseits über ein nicht weiter dargestelltes Gestänge in den Radarmen 26 und im Rahmen 24 mit dem Antriebsteil so gekoppelt ist, dass bei einer Verstellung aus der abgesenkten Position in eine angehobene Position die Lasträder 28 automatisch über die Schwinge 30 abgesenkt werden, um Bodenkontakt zu behalten. Diese Funktion ist ebenfalls allgemein bekannt. Die durch die Lasträder 28 gebildete Achse ist in den Figuren 1 und 2 mit 2 bezeichnet.

Nahe dem Rahmen 24 ist eine Zusatzachse 6 vorgesehen, die z.B. mindestens ein oder zwei Räder 30 aufweist, je nach verwendetem Fahrwerk für das Flurförderzeug. Wie erkennbar, liegt der Schwerpunkt 8 des Fahrzeugs 10 in unbeladenem Zustand zwischen den Achsen 18 und 6. Wie ferner in Figur 1 gezeigt, ruht das Rad 30 im vollständig abgesenkten Zustand des Lastteils 14 auf dem Untergrund, während die Radarme 26 und die Lasträder 28 etwas angehoben sind. In Fig. 1 ist bei 32 der Anfang einer sonst nicht weiter dargestellten Palette im Querschnitt dargestellt. Man erkennt eine untere Latte 3 und eine obere Latte 34. Beim Einfahren der Radarme 26 in die Palette ist daher die untere Latte 34 zu überwinden. Dadurch, dass sich die Lasträder 28 etwas oberhalb des Bodens befinden, können die Radarme auch bei glattem Untergrund in die Palette 32 einfahren, ohne diese vor sich her zu schieben. Das gleiche gilt natürlich für das Herausfahren.

Wie in Figur 1 ferner zu erkennen, ist die Höhe H2 der Oberseite der Radarme 26 etwas unterhalb der Unterseite der oberen Latte 34 (der Abstand zwischen dieser Unterseite und der Oberseite der unteren Latte 3 ist mit H 1 bezeichnet). Es versteht sich, dass in abgesenktem Zustand die Oberseite der Radarme 26 etwas niedriger liegt als die Unterseite der oberen Latte 34. Außerdem muß dieser Abstand so bemessen sein, dass bei einem gewissen Anheben des Lastteils 14 das Rad 30 der Zusatzachse 6 einerseits freikommt und andererseits durch Betätigung der Lasträder 28 über das nicht gezeigte Gestänge diese Bodenkontakt erhalten. Dadurch ist es möglich, die Palette vom Boden abzuheben.

Der letztere Fall ist in Figur 3 angedeutet. Hierbei liegt der Schwerpunkt wieder in üblicher Weise zwischen der Antriebsachse 18 und der Achse der Lasträder 28, die gegenüber den Radarmen 26 vollständig ausgefahren sind.

Im gezeigten Fall ist das Rad 30 der Zusatzachse 6 starr an den Radarmen 26 nahe dem Rahmen 24 angebracht. Es ist auch möglich, das Rad 30 und die Zusatzachse 26 annähernd mittig im Fahrzeug anzuordnen. Das Rad 30 kann auch zum Manövrieren des Fahrzeugs in abgesenkter Position des Lastteils 14 verwendet werden. Wegen des viel kleineren Wenderadius wird das Fahrzeug 10 besonders gut manövrierfähig.

Es ist auch denkbar, die Zusatzachse 6 in der Höhe verstellbar zu machen, beispielsweise mit Hilfe eines gesonderten Antriebs, um z.B. die Zusatzachse 6 vollständig außer Betrieb zu setzen, oder einer besonderen Palettengeometrie anzupassen.

## Patentansprüche

1. Niederhub-Flurförderzeug, mit einem eine Antriebsachse aufweisenden Antriebsteil und einem zwei parallele Radarme aufweisenden, mittels einer Hubvorrichtung höhenverstellbaren Lastteil, wobei die Radarme im freien Endbereich Lasträder aufweisen, die in Schwingen gelagert sind, die ihrerseits über ein Gestänge mit dem Antriebsteil so gekoppelt sind, dass die Lasträder in Richtung Untergrund verschwenkt werden, wenn das Lastteil angehoben wird, **dadurch gekennzeichnet, dass** am Lastteil (14) zwischen Antriebs- und Lastachse eine Zusatzachse (6) vorgesehen ist, auf der das Lastteil (14) in abgesenktem, unbelastetem Zustand ruht, während die Lasträder (28) weitgehend entlastet oder vom Untergrund abgehoben sind.

2. Flurförderzeug nach Anspruch 1, **dadurch gekennzeichnet, dass** die Zusatzachse (6) bei einem Vierrad-Fahrwerk mit mindestens einem Rad (30) versehen ist.

3. Flurförderzeug nach Anspruch 1, **dadurch gekennzeichnet, dass** die Zusatzachse (6) bei einem Drei- oder Fünfrad-Fahrwerk mindestens zwei Räder (30) aufweist.

4. Flurförderzeug nach einem der Ansprüche 1 bis 3, **dadurch gekennzeichnet, dass** die Zusatzachse (6) nahe dem Antriebsteil (12) angeordnet ist.

5. Flurförderzeug nach einem der Ansprüche 1 bis 3, **dadurch gekennzeichnet, dass** die Zusatzachse (6) etwa in der Mitte des Fahrzeugs (14) angeordnet ist.

6. Flurförderzeug nach einem der Ansprüche 1 bis 5, **dadurch gekennzeichnet, dass** die Zusatzachse mittels einer Verstellvorrichtung in der Höhe verstellbar ist.
